Europäisches Patentamt

(19) European Patent Office          (11) Publication number: **0 052 901**

Office européen des brevets                                    **A1**

(12) **EUROPEAN PATENT APPLICATION**

(21) Application number: **81201225.0**          (51) Int. Cl.³: **G 02 B 5/174**
                                                                 **C 03 C 17/02**
(22) Date of filing: **30.10.81**

(30) Priority: **25.11.80 NL 8006410**

(43) Date of publication of application:
**02.06.82 Bulletin 82/22**

(84) Designated Contracting States:
**BE DE FR GB IT NL SE**

(71) Applicant: **N.V. Philips' Gloeilampenfabrieken**
**Pieter Zeemanstraat 6**
**NL-5621 CT Eindhoven(NL)**

(72) Inventor: **Khoe, Giok Djan**
**c/o INT. OCTROOIBUREAU B.V. Prof. Holstlaan 6**
**NL-5656 AA Eindhoven(NL)**

(72) Inventor: **Kock, Hendrikus Gerardus**
**c/o INT. OCTOOIBUREAU B.V. Prof. Holstlaan 6**
**NL-5656 AA Eindhoven(NL)**

(72) Inventor: **Küppers, Dieter**
**c/o INT. OCTOOIBUREAU B.V. Prof. Holstlaan 6**
**NL-5656 AA Eindhoven(NL)**

(72) Inventor: **Lydtin, Hans-Jürgen**
**c/o INT. OCTROOIBUREAU B.V. Prof. Holstlaan 6**
**NL-5656 AA Eindhoven(NL)**

(74) Representative: **Auwerda, Cornelis Petrus et al,**
**INTERNATIONAAL OCTROOIBUREAU B.V. Prof.**
**Holstlaan 6**
**NL-5656 AA Eindhoven(NL)**

(54) Method of producing integrated optical waveguide circuits and circuits obtained by means of this method.

㊵ Optical waveguide circuits, such as signal splitters can be produced by etching grooves in a transparent substrate and by filling said grooves with glass having a higher refractive index than the material of the substrate. Two substrates can be placed on top of each other with the surfaces in which the filled grooves have been provided in mutual contact so as to form a laminated integrated optical waveguide circuit.

FIG.8

Croydon Printing Company Ltd.

"Method of producing integrated optical waveguide circuits and circuits obtained by means of this method".

The invention relates to a method of producing an integrated optical waveguide circuit, wherein a substrate of glass is provided with grooves corresponding to the desired circuit pattern, glass having a refractive index which is higher than the refractive index of the glass of the substrate being deposited on the substrate in such a manner that the grooves are filled, whereafter the applied layer is removed to such an extent that the glass of a higher refractive index only remains behind in the grooves.

Japanese Patent Application (Kokai) No. 53-70939, which has been published describes a method of producing an optical waveguide circuit. According to an abstract in the English language published in Patents Abstracts of Japan Vol. 2, page 5556E78 (1978), the following procedure is followed: In a baseplate of glass, for example, of fused silica, grooves are machined. The grooves can be smoothed by means of etching or fire polishing. A mixture of gases such as $SiCl_4$, $GeCl_4$ and $O_2$ is supplied and by means of a CVD method a fine powder of $SiO_2$ and $GeO_2$ is deposited on the base plate, which is heated in a reaction tube. The powder is vitrified by heating, thereafter the deposited glass layer is removed by polishing to such an extent that deposited glass only remains behind in the grooves. The glass remaining in the grooves forms a low-loss optical waveguide. If so desired, a protective layer of $SiO_2$ and $B_2O_3$ may be provided on the glass plate. The Figures reproduced in the abstract show that the grooves in the base plate have a rectangular cross-section.

The said method offers only a limited choice as regards the starting material, as in this method the substrate must be heated to rather high temperatures both during deposition of the fine $SiO_2$ and $GeO_2$ powder and during the subsequent vitrification. The substrate and the grooves provided therein must retain their shapes. In the majority of cases the use of substrates made of fused silica seems to be an absolute condition. A further limitation of the described method is that the coefficient of thermal expansion of the deposited glass must not differ too much from the coefficient of thermal expansion of the substrate material, as otherwise during cooling after vitrification there is the risk that the deposited glass is loosened from the substrate. Finally, because of optical consideration, the rectangular cross-section of the grooves does not seem advantageous.

It is an object of the invention to provide a method in which the said limitations of the prior art process do not occur, or only to a limited extent.

According to the invention, this object is accomplished by a method which is characterized in that

the substrate is provided with grooves having a substantially semicircular cross-section,

glass is directly deposited from the gas phase onto the substrate while filling the grooves, by means of a non-isothermal plasma-activated C.V.D. process.

The invented method may generally be put into effect without the necessity of heating the substrate separately. Actually, when the method is used, the temperature of the substrate normally increases to some hundreds of degrees Celsius as the result of the plasma treatment. In some cases it may be advantageous to preheat the substrates before they are contacted by the plasma. However, the maximum substrate temperature must remain below the softening temperature of the substrate. As the reaction proceeds with a sufficiently high speed, at any rate below approximately $500^{\circ}C$, a wide choice of materials, both for the substrate and for the composition of the glass to be deposited, is made possible. The wider choice in substrate materials offers the possibility to select materials which may be easily worked.

Grooves having a substantially semicircular cross-section are advantageous from an optical point of view, particularly if in accordance with a preferred
embodiment of the method for producing a laminated integrated optical waveguide circuit a substrate portion is
provided with a predetermined pattern of grooves having a
substantially semicircular cross-section, another substrate
portion is provided with the mirror-image of the same
pattern of grooves having a substantially semicircular
cross-section, glass is directly deposited on the two
substrate portions while filling the grooves by means of
a non-isothermal plasma-activated CVD process and after
polishing of the substrate portions, glass deposited from
the vapour phase only remains behind in the grooves, the
substrate portions being superposed so that the patterns
of glass-filled grooves abut and are in registration and
form a circuit of waveguides having substantially circular
cross-sections.

The substantially semicircular cross-section of
the grooves guarantees a good uniform filling with glass
during the deposition process. There is no danger of
cavities being formed, which risk exists when grooves of
a rectangular cross-section are filled, particularly if
glass powder is deposited and is subsequently vitrified in
the grooves. In addition, the substantially semicircular
cross-section of the grooves results in a more symmetrical
stress pattern if, in spite of the comparatively low
deposition temperature, stresses build up in the glass
deposited in the grooves owing to a difference between the
coefficients of expansion of said glass and the substrate
material.

The grooves may be formed by mechanical means,
for example, by pressing into the surface of a substrate.

However, the grooves are preferably provided by
means of etching, as by means of etching it is possible to
obtain the desired semicircular cross-sectional shape
much more accurately than by means of pressing.

Glass is directly deposited onto the substrate,
while filling the grooves, from the gas phase by means of a non-isothermal plasma-activated chemical vapour deposition process.

A "non-isothermal plasma-activated vapour chemical deposition (CVD) process" is here understood to mean a process in which a what is commonlyreferred to as a cold plasma is used for the activation. In a cold plasma only electrons have a high kinetic energy. With such a plasma it is even possible to bring mixtures of components in the gaseous or vapour state to reaction, which cannot be activated thermally. By means of a non-isothermal plasma-activated CVD process glass layers can be deposited directly from the gas phase at comparatively low temperatures. This is a great advantage compared with processes in which in a first step pulverulent material is deposited which must be heated in a next step to obtain a glass layer. In such last-mentioned processes which proceed wholly or partly homogeneously in the gas phase, a uniform coating of a profiled substrate is furthermore very problematical, the build,up of a waveguide having a refractive index gradient seems to present particular difficulties. This is caused by the fact that the deposition depends on diffusion.

In the non-isothermal plasma-activated CVD process, the deposition reaction only proceeds heterogeneously, so that even in the case of deep grooves layers of uniform thickness can be deposited on the entire substrate, consequently the production of, for example, a graded index waveguide does not present significant difficulties.

A further advantage of this process is that it proceeds at a comparatively low temperature, _i.e._ between ambient temperature and approximately $500^{\circ}C$. At such low deposition temperatures the risk of a harmful stress formation in the deposited glass when there is a difference between the coefficients of expansion of the deposited glass and the substrate is smaller than in a CFD process which requires temperatures well above $500^{\circ}C$. If the method in accordance with the invention is used, optical waveguides of both the stepped index type and the graded index type can be produced. To this end the grooves in the substrate are provided with a glass consisting of $SiO_2$ and a refractive index-increasing dopant, such as $Si_3N_4$, $Sb_2O_3$, $GeO_2$. In view of its high refractive index, $Si_3N_4$ is preferred.

Thereafter, the deposited layer is removed by grinding and/or polishing to such an extent that only the glass deposited in the grooves is left.

The method in accordance with the invention will now be described in detail by way of example with reference to the accompanying dfawings, the drawings also showing a number of wave-guide circuits, both in the form of passive and of active components which can be produced wholly or partly by means of the method in accordance with the invention.

Figure 1 is a cross-sectional view of a substrate with a mask,

Figure 2 is a plan view of the substrate with the mask,

Figure 3 is a cross-sectional view of the substrate after etching and removal of the mask,

Figure 4 is a perspective view of a substrate having a groove pattern,

Figure 5 shows schematically a number of substrates in a deposition chamber,

Figure 6 is a cross-sectional view of the substrate after the deposition of a number of layers,

Figure 7 is a cross-sectional view of the substrate after polishing,

Figure 8 is a perspective view of a signal splitter obtained by laminating two substrates with filled grooves.

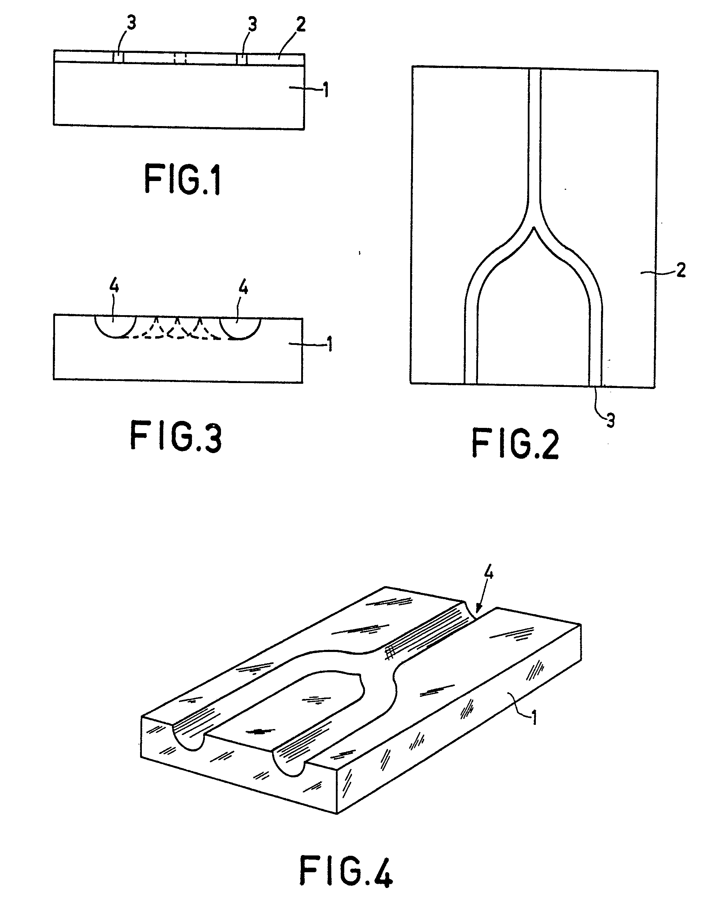

In a first step an etching mask 2 (Figure 1), for example made of metal, is provided. A suitable metal is, for example, chromium, which may be deposited by sputtering onto the substrate. A portion 3 of the metal mask is removed by etching down to the substrate 1 (Figure 2) to form the desired pattern, for example employing a photomask (not shown) which covers the mask 2. The etching agent may have, for example, the following composition:

220 g cerium ammonium nitrate

100 ml of a solution containing 65% nitric acid

900 ml water.

After the portion 3 have been removed by etching through apertures in the photomask, the photomask is removed. Photomask materials and etching agents suitable for this purpose are commercially available. A material on the basis of Novolac resins with a light-sensitive diazo compound for example a naphthodiazoquinonsulphonic acid ester may be used as the photomask material. Thereafter, the substrate 1 is partially removed by etching _via_ the apertures 3.
A suitable etching agent consists of a mixture of 100 ml 40% HF and 100 ml of a solution obtained by mixing 600 ml of concentrated $H_2SO_4$ (98%) with 150 ml $H_2O$. 2 g gelatine is dissolved in the mixture. After a sufficient quantity of the substrate has been removed by etching, the mask 2 is removed. There now remain grooves 4 in the substrate 1, which have a semicircilar cross-section (Figure 3).
Figure 4 is a perspective view of the substrate 1 with the groove 4, so that a good impression of the assembly can be obtained. Substrates 1 provided with grooves 4 are coated in a reaction chamber 5 by means of the non-isothermal plasma-activated chemical vapour deposition method, which is known in itself, with a layer of glass having a higher refractive index than the substrate. The gas supply system is indicated by 7; 6 indicates the movable micro-wave cavity and 8 is a vacuum pump (see for the employed techniques for example United States Patent Specification 4,145,456, the contents of which are incorporated herein by reference as far as necessary). If a number of layers having a different refractive index are deposited on top of each other, an assembly is obtained whose cross-section is shown in Figure 6. A number of layers 9 are deposited onto the substrate 1 and into the grooves 4. Figure 6 shows only a limited number of layers. In actual practice, the depth of the grooves being, for example, 50 $\mu$m, the number of layers may amount to, for example, 100. If a waveguide of the graded index type is produced, the refractive index in these layers increases. This may, for example, be achieved by using a mixture of $SiO_2$ and an admixture such as $Si_3N_4$ or $GeO_2$ which have a higher refractive index than silica by progressively increasing admixture in the mixture.

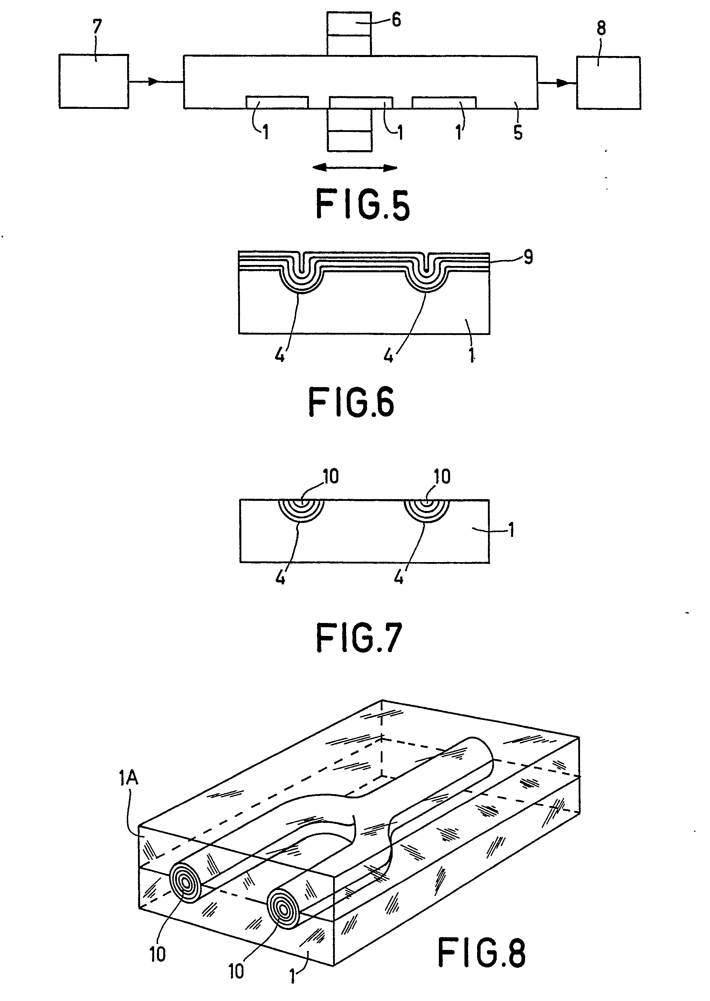

It is of course alternatively possible to produce a waveguide of the step index type by depositing a number of layers having the same composition on top of each other. Thereafter the layers 9 are removed by polishing down to the surface of the substrate 1. Figure 7 is a cross-sectional view of the assembly after polishing, reference 10 designates the waveguide located in the apertures 4 in the substrate. Finally, Figure 8 shows schematically the situation obtained after two substrates whose surfaces contain a waveguide are brought into contact by means of these surfaces. The construction, a cross-sectional view of which is shown in Figure 7, may however alternatively be coated directly with a layer of glass having a lower refractive index than the glass in the channels. This layer has a protective function.

With the method in accordance with the invention it is also possible to produce, for example, "adders" and "splitters" with several branches. Alternatively the channels in two substrates which are put on top of each other may cross without the signals passed through the channels interfering with each other.

CLAIMS

1.        A method of producing an integrated optical wave-guide circuit in which a substrate of glass is provided with grooves corresponding to the desired circuit pattern, glass having a refractive index which is higher than the refractive index of the substrate being deposited on the substrate in such a manner that the grooves are filled whereafter the deposited layer is removed to such an extent that the glass of a higher refractive index only remains behind in the grooves , characterized in that the substrate is provided with grooves having a substantially semicircular cross-section and that glass is directly deposited from the gas phase onto the substrate, while filling the grooves, by means of a non-isothermal plasma-activated chemical vapour deposition process.

2.        A method as claimed in Claim 1, characterized in that the grooves are provided by etching the surface of the substrate to form a predetermined pattern.

3.        A method as claimed in Claim 1, characterized in that a glass film of $SiO_2$ doped with $Si_3N_4$ is deposited onto the substrate while filling the grooves.

4.        A method of producing a laminated integrated optical waveguide circuit using integrated optical waveguides produced by the methods according to the preceding Claims 1-3, characterized in that a substrate portion is provided with a predetermined pattern of grooves having a substantially semicircular cross-section, another substrate-portion is provided with the mirror-image of the same pattern of grooves having a substantially semicircular cross-section, the substrate portions being superposed so that the patterns of glass-filled grooves abut and are in registration and form a circuit of waveguides having substantially circular cross-sections.

5.        An optical waveguide circuit obtained by means of the method claimed in any of the Claims 1-4.

0052901

FIG.1

FIG.3

FIG.2

FIG.4

1-Ⅱ-PHN 9897

FIG.5

FIG.6

FIG.7

FIG.8

## EUROPEAN SEARCH REPORT

European Patent Office

Application number

EP 81 20 1225

# DOCUMENTS CONSIDERED TO BE RELEVANT

| Category | Citation of document with indication, where appropriate, of relevant passages | Relevant to claim |
|---|---|---|
| Y | <u>EP - A - 0 017 296</u> (N.V. PHILIPS)<br>* Page 4, lines 2-36; page 5, lines 1-13 * | 1,3 |
| Y | <u>AT - A - 327 425</u> (M.E. PERELMAN)<br>* Page 2, lines 40-51; page 4, lines 14-19, lines 36-51 * | 1,4 |
| D,A | PATENTS ABSTRACTS OF JAPAN, vol. 2, page 5556 E 78<br>& JP - A - 53 70 839 (FUJITSU)<br>* Abstract * | 1,2 |
| A | <u>US - A - 3 719 462</u> (P. ANDREATCH)<br>* Column 4, lines 10-66 * | 1 |

**CLASSIFICATION OF THE APPLICATION (Int. Cl. 3)**

G 02 B 5/174
C 03 C 17/02

**TECHNICAL FIELDS SEARCHED (Int.Cl. 3)**

G 02 B 5/14
C 03 C 17/02
C 03 B 19/00
C 03 C 3/04

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 10-03-1982 | PFAHLER |

EPO Form 1503.1  06.78